**Europäisches Patentamt**

(19) **European Patent Office**

**Office européen des brevets**

(11) Veröffentlichungsnummer: **0 116 260**
**B1**

(12) # EUROPÄISCHE PATENTSCHRIFT

(45) Veröffentlichungstag der Patentschrift:
21.06.89

(51) Int. Cl.⁴: **B 23 Q 1/28**

(21) Anmeldenummer: **83810610.2**

(22) Anmeldetag: **22.12.83**

(54) **Einrichtung zur Halterung eines Gegenstandes.**

(30) Priorität: **18.01.83 GB 8301296**

(43) Veröffentlichungstag der Anmeldung:
**22.08.84 Patentblatt 84/34**

(45) Bekanntmachung des Hinweises auf die Patenterteilung:
**21.06.89 Patentblatt 89/25**

(84) Benannte Vertragsstaaten:
**CH DE FR GB IT LI SE**

(56) Entgegenhaltungen:
**CH-A-209 697**
**DE-A-2 347 735**
**DE-B-1 045 739**
**FR-A-2 107 265**
**GB-A-2 082 484**

(73) Patentinhaber: **Büchler B-SET AG, Wiler Strasse 98, CH- 9230 Flawil (CH)**

(72) Erfinder: **Büchler, René, Weidweg 2, CH- 9245 Sonnental (CH)**

(74) Vertreter: **EGLI- EUROPEAN PATENT ATTORNEYS, Horneggstrasse 4, CH- 8008 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

### Einrichtung zur Halterung eines Gegenstandes

Die vorliegende Erfindung betrifft gemäß Oberbegriff von Patentanspruch 1 eine Einrichtung zur Halterung eines Gegenstandes in einer gewünschten räumlichen Lage, mit einer Führungsbahn und einem Schlitten, wobei am Schlitten der Gegenstand befestigt sein kann.

Eine solche Einrichtung ist insbesondere zum Positionieren und zur Halterung eines Werkstückes bzw. eines Werkzeuges vor allem an einer Elektroerosionsmaschine geeignet. Diese Einrichtung kann allerdings auch bei anderen Arten der Bearbeitung von Werkstücken verwendet werden.

Einer der Gründe für den Stillstand einer Bearbeitungsmaschine liegt darin, dass die Maschine untätig ist, wenn die bedienende Person die Maschine umstellt, damit diese eine andere Arbeitsoperation ausführen kann oder wenn sich im Bearbeitungsbereich der Maschine noch ein anderes Werkstück befindet.

Es gibt Systeme, die es erlauben, dass das Werkstück an einem dieses haltenden Rahmen voreingestellt wird, und zwar in einer bestimmten räumlichen Anordnung, und dass das Werkstück samt dem Rahmen in Bezug auf das Werkzeug der Maschine erst später positioniert wird. Solche Systeme erlauben es der bedienenden Person, ein sorgfältig ausgerichtetes Werkstück bereitzustellen, während die Maschine einen anderen Gegenstand noch behandelt. Dann wird der Halterahmen mit dem Werkstück in die Behandlungsslage schnell und sorgfältig gebracht, wobei der Rahmen in Bezug auf das Werkzeug der Maschine richtig orientiert wird. Dies vermindert wesentlich die Stillstandzeiten der Maschine.

Eine bekannte Anordnung dieser Art enthält einen Querbalken mit einer Anzahl von Bohrungen, die in gleichen Abständen voneinander entlang dem Balken ausgeführt sind. Ferner enthält eine solche Anordnung eine Führung, die derart ist, dass sie auf dem Balken mit Hilfe von Bolzen verriegelt werden kann, die in den genannten Bohrungen im Balken eingesteckt sind. Die Führung weist eine Oberfläche auf, auf der ein Werkstückhalter mit Hilfe von Bolzen oder dgl. befestigt ist. Gewöhnlich ist die Führung mit wenigstens einem geeigneten Feststellmittel versehen. Dieses Mittel positioniert einen Werkstückhalter in Bezug auf die Führung. Es sind Klammern vorgesehen, die den Werkstückhalter an der Führung und das Werkstück am Werkstückhalter festklemmen. Als Mittel zur Befestigung des Werkstückes am Werkstückhalter können ein Spannkopf oder Ähnliches dienen, oder auch eine Anzahl von Löchern, die Befestigungsschrauben oder -bolzen aufnehmen können.

Solche Anordnungen arbeiten im wesentlichen zufriedenstellend.

Die Ausrichtung der Bohrungen im Balken mit jenen in der Führung kann allerdings eine zeitraubende Angelegenheit darstellen. Ausserdem gibt es bei der vorbekannten Anordnung eine nur beschränkte Anzahl von möglichen Einstellungen der Führung in Bezug auf den Balken. Jene Einstellungen die zwischen zwei benachbarten Öffnungen im Balken liegen können bei der bekannten Anordnung nicht erreicht werden.

Ein weiterer Nachteil der bekannten Einrichtung beruht darauf, dass der Schlitten der Einrichtung nur am Ende der Führungsbahn auf dieses eingesetzt werden kann. Dann muss man den Schlitten entlang der Führungsbahn bis zur gewünschten Stelle der Führungsbahn verschieben. Da die aufeinander aufliegenden Oberflächen der zwei Stücke sehr präzise bearbeitet sind, ist es nicht leicht, den Schlitten entlang der Führungsbahn über eine längere Strecke zu bewegen. Hierbei können in den genannten Oberflächen Wellen entstehen, die die Beibehaltung der einmal eingestellten Lage des Schlittens in Bezug auf die Führungsbahn während des Bearbeitungsvorganges unmöglich machen.

Die DE-OS-2 347 735, die den nächstkommenden Stand der Technik beschreibt, zeigt eine Führungsbahn und einen Schlitten, bei der eine Haltevorrichtung vorgesehen ist, die mit der darunterliegenden Nut der Führungsbahn in Eingriff stehen kann.

Hier ist jedoch, wie zuvor erläutert, ebenfalls von Nachteil, daß der Schlitten entlang der Führungsbahn bewegt werden muß, um auf eine andere Führungsbahn gelangen zu können.

Aufgabe der Erfindung ist es daher, eine präzise Positionierung eines Werkstückes bei einem Minimum an Stillstandzeiten und einem Maximum an Flexibilität zu erreichen.

Gelöst wird diese Aufgabe durch die kennzeichnenden Merkmale des Patentanspruches 1.

Die Führungsbahn weist vorteilhaft einen im wesentlichen quadratförmigen oder rechteckigen Querschnitt auf, wobei wenigstens zwei gegenüberliegende Oberflächen der Führungsbahn mit im wesentlichen V-förmigen Kanälen bzw. Nuten versehen sind, die parallel zur Kante der angrenzenden Seite bzw. Frontseite verlaufen. Mit Vorteil kann die Führungsbahn mit einer dazwischen liegenden Fläche in Eingriff treten, wenn es mit geeigneten Elementen zur Zusammenarbeit mit den V-förmigen Kanälen versehen wird. Dann ist es nur erforderlich, in den genannten Bestandteilen Mittel anzuordnen, die diese voneinander drücken und die die gegenüberliegenden Oberflächen der V-förmigen Anordnungen festklemmen.

Bei einer vorteilhaften Ausführungsform ist die Führungsbahn insbesondere derart ausgeführt, dass sie Schlitten auf mindestens zwei ihrer Oberflächen aufnehmen kann, die unter einem rechten Winkel zueinander stehen. In einem solchen Fall ist ein Doppelkanal bzw. eine Doppelnut im Bereich einer der Kanten der Führungsbahn mit einem im wesentlichen rechteckigen Querschnitt ausgeführt. Hierbei sind bei einem Durchgang der maschinellen Bearbeitung zwei geneigte Klemmoberflächen vorgesehen, die mit den genannten V-förmigen Kanalkanten des Schlittens zusammenarbeiten.

Falls der Doppelkanal tief genug geschnitten ist, so kann die Führungsbahn wenigstens zwei Schlitten aufnehmen, die auf der genannten Führung in Deckung sind und die die Positionierung des Werkstückes erleichtern.

Wenn gewünscht, dann kann die Führungsbahn derart ausgeführt sein, dass sie vertikal verläuft. In einem solchen Fall ist die Führungsbahn im Bereich der vorgesehenen Basis derselben mit einer Grundplatte versehen, die mit geeigneten Befestigungsmitteln zum Anschluss an einen Maschinentisch versehen ist.

Der Schlitten kann einen Kanal bzw. eine Ausnehmung aufweisen, die mit gegenüberliegend angeordneten und entgegengesetzt divergierenden Kanten versehen sind. Diese Kanten können mit den V-förmigen Teilen der Führungsbahn zusammenarbeiten. Der Kanal kann in einer ersten Richtung orientiert sein, während auf einer anderen Oberfläche des Schlittens eine Schiene bzw. ein länglicher Vorsprung unter einem rechten Winkel in bezug auf den Kanal angeordnet sein kann. Die Seitenwände des Vorsprungs sind ebenfalls mit im wesentlichen V-förmigen Kanälen versehen, die mit dem Werkstückhalter zusammenwirken.

Der Werkstückhalter weist vorteilhaft eine im wesentlichen L-förmige Ausbildung auf, wobei die rückwärtige Seite desselben mit einem geeigneten Kanal bzw. einer Ausnehmung von im wesentlichen trapezförmigem Querschnitt versehen ist. Entweder die Oberfläche oder die entfernte Kantenfläche des Gliedes mit der L-Form können mit Bohrungen zur Befestigung des Werkstückes versehen sein.

Um die Orientierung von in der Bohrung oder im Werkstückhalter untergebrachten Schäften nachprüfen zu können und um diese in bezug auf den Werkstückhalter genau orientieren zu können, ist ein Sinuslineal vorgesehen. Dieses kann mit einem Blatt versehen sein, das zum Zusammenwirken mit dem Schaft ausgebildet ist. Dieses untere Blatt ist über ein Scharnier an ein im wesentlichen L-förmiges Glied angeschlossen, dessen Ende mit einem Kontaktmittel oder einer Rolle versehen ist. Wenn das Lineal angewendet wird, verursacht die relative Bewegung des unteren Blattes eine Schwenkbewegung des oberen Gliedes.

In der Bohrung kann ein Schaft untergebracht sein, der mit einem Schraubstock versehen ist. Der Schraubstock kann zur Halterung von verhältnismässig kleinen Werkstücken ausgebildet sein, die präzise behandelt werden sollen.

Nachstehend werden Ausführungsbeispiele der vorliegenden Erfindung anhand der beiliegenden Zeichnungen näher erläutert. Es zeigt:

Fig. 1 einen vertikalen Schnitt durch die vorliegende Einrichtung, die eine Führungsbahn sowie einen Schlitten aufweist,

Fig. 2 eine Draufsicht der in Fig. 1 dargestellten Einrichtung,

Fig. 3 in einem vertikalen Schnitt eine Weiterbildung der Führungsbahn der Einrichtung nach Fig. 1,

Fig. 4 und 5 weitere Ausführungsformen der Führungsbahn,

Fig. 6 perspektivisch die vorliegende Einrichtung mit vertikal angeordneter Führungsbahn,

Fig. 7 in Draufsicht die Unterseite des Schlittens mit einer Haltevorrichtung,

Fig. 8 in einem Längsschnitt VIII - VIII den Schlitten mit der Haltevorrichtung nach Fig. 7,

Fig. 9 und 10 in einem Längsschnitt zwei weitere Ausführungsformen des Schlittens mit einer Haltevorrichtung,

Fig. 11 perspektivisch den Schlitten, der neben einer Ausnehmung auch einen Vorsprung mit Nuten aufweist,

Fig. 12 in Frontansicht den Schlitten, der eine schmale Partie aufweist,

Fig. 13 den Schlitten mit einem magnetischen Glied,

Fig. 14 perspektivisch einen gleitenden Tisch auf dem Schlitten der vorliegenden Einrichtung,

Fig. 15 bis 17 perspektivisch einen Schlitten der einen L-förmigen Querschnitt aufweist,

Fig. 18 perspektivisch einen Schlitten mit einem Schaft und einem Schaftloch,

Fig. 19 perspektivisch ein Sinuslineal, das einen Schaft aufweist, der in das Schaftloch einsteckbar ist,

Fig. 20 den Schnitt XX - XX aus Fig. 19,

Fig. 21 perspektivisch einen Schraubstock, der mit einem Schaft versehen ist,

Fig. 22 perspektivisch eine weitere Ausführungsform der Führungsbahn nach Fig. 1 bzw. 6 und

Fig. 23 perspektivisch eine weitere Ausführungsform des Schlittens nach Fig. 15 bzw. 16.

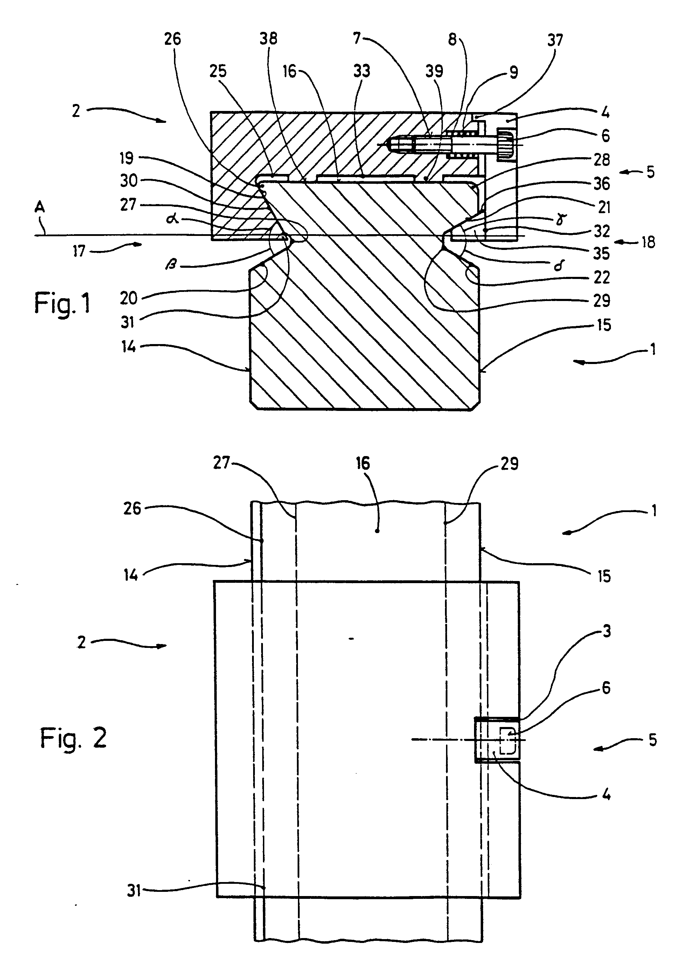

Die in Fig. 1 und 2 dargestellte Einrichtung weist eine Führungsbahn 1 auf, das im wesentlichen stangenförmig ist, wie aus Fig. 2 ersichtlich ist. Auf dieser Führungsbahn 1 sitzt ein Schlitten 2 der vorliegenden Einrichtung. Der Schlitten 2 weist eine Aussparung 3 (Fig. 2) auf, in der sich die Klinke 4 einer Haltevorrichtung 5 befindet. Die Klinke 4 ist mit Hilfe einer Schraube 6 in der Aussparung 3 gehalten, wobei die Schraube 6 in einer Gewindebohrung 7 eingeschraubt ist, die im Schlitten 2 ausgeführt ist. Der äussere Abschnitt der Bohrung 7 ist mit einer Erweiterung 8 ausgeführt, in der sich eine Druckfeder 9 befindet. Das eine Ende dieser Feder 9 stützt sich auf dem Boden der Erweiterung 8 ab, während das andere Ende der Feder 9 gegen die Klinke 4 drückt. Wenn man die Schraube 6 löst, dann verursacht die genannte Feder 9, dass sich die Klinke 4 aus der Aussparung 3 heraus bewegt und dass sie in ihrer äusseren Endlage nachher auch verbleibt. Dies ist sehr wichtig für das Aufsetzen des Schlittens 2 auf die Führungsbahn 1, wie dies später noch näher beschrieben wird.

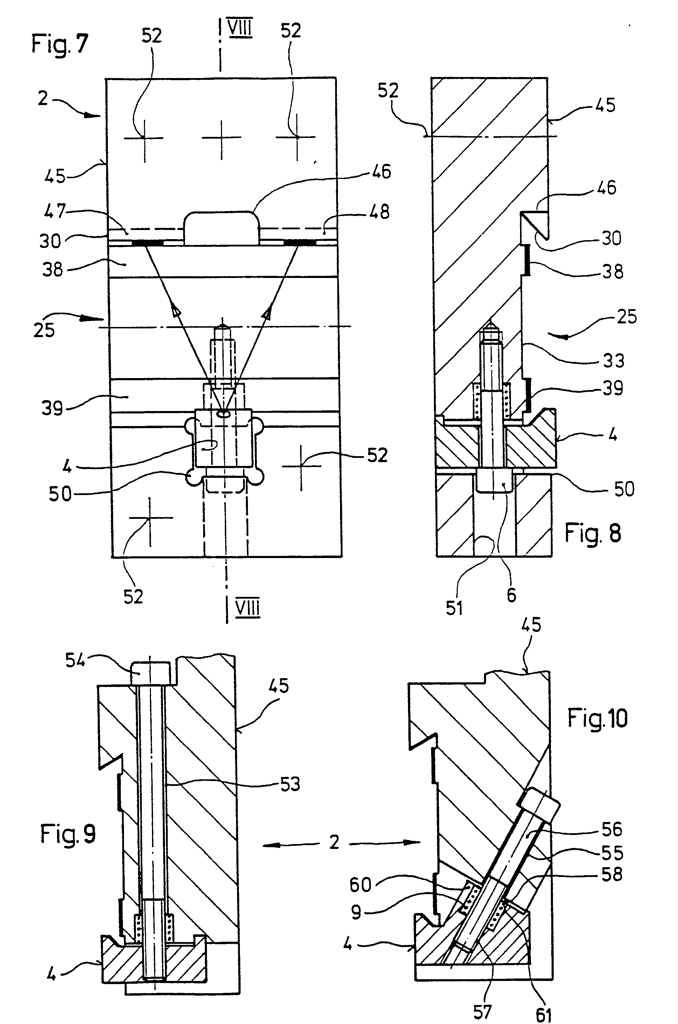

Die Führungsbahn 1 kann über Füsse 10 (Fig. 5) auf dem Aufspanntisch 11 einer Werkzeugmaschine oder auf einem Voreinstelltisch befestigt sein. Manchmal ist die Führungsbahn unmittelbar auf dem genannten Tisch 11 mittels nicht dargestellter jedoch allgemeinen bekannter Schrauben befestigt. Auf dem Schlitten 2, der hier auch als Halter 2 bezeichnet wird, kann ein Werkstück (nicht dargestellt) direkt oder indirekt befestigt sein, wie dies im nachstehenden noch näher beschrieben sein wird.

Die Randpartien zweier einander gegenüberliegenden Seitenflächen 14 und 15 der Führungsbahn 1, die an einer der Oberflächen 16 der Führungsbahn angrenzen sind mit Nuten 17 und 18 versehen. Die Flanken 19 und 20 bzw. 21 und 22 dieser Nuten 17 bzw. 18 schliessen mit der die Nuten 17 und 18 längs schneidenden Ebene A Winkel Alpha, Beta, Gamma und Delta, die von 0 Grad verschieden sind. Der Schlitten 2 weist eine Ausnehmung 25 auf, die zur Aufnahme der so profilierten Partie der Führungsbahn 1 bestimmt ist.

Die Nuten 17 und 18 sind im dargestellten Beispiel unterschiedlich ausgebildet. Die erste und der genannten Oberseite 16 der Führungsbahn näher liegende Flanke 19 der linken Nut 17 schneidet die Oberseite 16 der Führungsbahn 1, so daß diese Eckpartie der Führungsbahn 1 eine scharfe Kante 26 aufweist. Der Winkel Alpha, welchen diese Flanke 19 mit der Ebene A schliesst, beträgt beispielsweise 60 Grad. Der Winkel Beta welchen die andere Flanke 20 der linken Nut 17 mit der Ebene A schliesst kann 30 Grad betragen. Zwischen den genannten zwei Flanken 19 und 20 ist ein Freistich 27 in der Bodenpartie dieser Nut 17 ausgeführt, dessen Zweck noch erläutert werden wird.

Bei der anderen Nut 18 endet die der genannten Oberfläche 16 der Führungsbahn 1 näher liegende Flanke 21 in dieser Seitenfläche 15 der Führungsbahn 1 und somit in einem Abstand von der genannten Oberfläche 16 der Führungsbahn 1. Diese Eckpartie der Führungsbahn 1 weist somit eine stumpfe Kante 28 auf. Die Winkel Gamma und Delta, die die Flanken 21 und 22 dieser Nut 18 mit der Ebene A schliessen, können 30 Grad betragen, oder sie weisen einen anderen Wert zwischen 15 und 60 Grad auf. Zwischen den Flanken 21 und 22 dieser zweiten Nut 18 ist ein flacher Boden 29 ausgeführt. Diese zweite Nut 18 weist somit ein U-förmiges Profil mit nach aussen geneigten Schenkeln 21 und 22 auf.

Die bereits erwähnte Ausnehmung 25 im Schlitten 2 ist als eine seichte Nut ausgeführt. wobei eine der Seitenwände 30 dieser Ausnehmung 25 unterschnitten ist. Diese unterschnittene Wand 30 der Ausnehmung 25 steht mit der ersten Flanke 19 der ersten Nut 17 in Eingriff. Die scharfe Kante 31 des Schlittens 2 die sich am freien Ende der unterschnittenen Wand 30 befindet, liegt im Freistich 27, so dass diese Kante 31 mit der Führungsbahn 1 nicht in Berührung kommen kann. Der durch den Freistich 27 begrenzte Freiraum stellt ausserdem sicher, dass die scharfe Kante 31 die Führungsbahn 1 nicht einmal dann berühren kann, wenn der Schlitten 2 um diese Kante 31 geschwenkt wird, wie dies im nachstehenden beschrieben ist.

Einer der wichtigsten Vorteile dieser Einrichtung ist, dass der Schlitten 2 auf jeder Stelle der Führungsbahn 1 auf dieses von oben aufgesetzt werden kann. Der Schlitten 2 braucht somit nicht entlang der Führungsbahn 1 über eine lange Strecke verschoben zu werden. Zu diesem Zweck verläuft die zweite Wand 32 der Ausnehmung 25 etwa rechtwinklig zum Boden 33 der Ausnehmung 25, wobei sich diese zweite Wand 32 sogar in einem Abstand von der stumpfen Kante 28 der Führungsbahn 1 befindet. Die zweite Wand 32 der Ausnehmung 25 steht somit nicht in Eingriff mit der zweiten Nut 18 der Führungsbahn 1. Den Eingriff in die Nut 18 besorgt die bereits besprochene Klinke 4, die in diesem Bereich des Schlittens 2 angeordnet ist.

Die Klinke 4 weist eine Nase 35 auf, die in der zweiten Nut 18 der Führungsbahn 1 liegt bzw. in diese gelangen kann, wenn die Schraube 6 angezogen wird. Die Oberseite 36 der Nase 35 ist geneigt, wobei der Winkel, welchen diese Oberseite 36 der Nase 35 mit der Ebene A schliesst gleich gross ist, wie der Winkel Gamma. Unter diesen Umständen kommt die Oberseite 36 der Nase 3 beim Anziehen der Schraube 6 zum Aufliegen auf die obere Flanke 21 der zweiten Nut 18. Die Spitze der Nase 35 ist abgeflacht, damit die Nase 35 den Boden 29 der Nut 18 nicht berühren kann. Am anderen Ende der Klinke 4 ist ein Vorsprung 37 ausgebildet, der in einer entsprechenden Ausnehmung des Schlittens 2 liegt. Dieser Vorsprung 37 dient zur Einhaltung einer bestimmten Höhe der Klinke 4, vor allem wenn die Schraube 6 angezogen wird. Denn dann wird die Klinke 4 wegen dem Aufliegen der Nase 35 auf der oberen Flanke 21 nach unten gedrückt.

Wenn man den Schlitten 2 von der Führungsbahn 1 entfernen will. dann löst man die Schraube 6. Hierbei bewegt sich die Klinke 4 unter der Einwirkung der Druckfeder 9 von der Führungsbahn 1 weg. Die Oberseite 36 der Nase entfernt sich von der oberen Flanke 31 der rechten Nut 18 bis die Nase 35 diese Nut 18 vollständig verlässt. Jetzt kann man die rechts liegende und die Klinke 4 aufweisende Partie des Schlittens 2 aufwärts schwenken, und zwar um eine Achse, die im Bereich der scharfen Kante 31 des Schlittens 2 und somit auch im Bereich des Freistiches 27 liegt.

Beim Aufsetzen auf die Führungsbahn 1 wird zunächst die scharfe Kante 31 des Schlittens 2 und somit auch die unterschnittene Seitenwand 30 der Ausnehmung 25 im Schlitten 2 mit der oberen Flanke 19 der linken Nut 17 in der Führungsbahn 1 in Eingriff gebracht. Danach wird die rechte Partie des Schlittens 2 abwärts bewegt. Dank der Druckfeder 9 wird die Klinke 4 in ihrer äussersten Endstellung gehalten, so dass sich die Nase 35 der Klinke 4 von der stumpfen Kante 28 der Führungsbahn 1 in einem Abstand befindet und auf der Oberfläche 16 der Führungsbahn 1 nicht aufschlagen kann. Die rechte Partie des Schlittens 2 kann somit auf die obere Partie der Führungsbahn 1 ungehindert aufgesetzt werden. Während des Anziehens der Schraube 6 gelangt zunächst die Nase 35 in die rechte Nut 18 der Führungsbahn 1 und erst danach kommt die Oberseite 36 derselben zum Aufliegen auf der oberen Flanke 21 der rechten Nut 18. Wenn man die Schraube 6 ausreichend anzieht, dann sitzt der Schlitten 2 auf der Führungsbahn 1 fest.

Der Boden 33 der Ausnehmung 25 ist mit in der Verschieberichtung des Schlittens 2 verlaufenden flachen und breiten Vorsprüngen 38 und 39 versehen, die das Gleiten des Schlittens 2 auf der Führungsbahn erleichtern, wenn die Lage des Schlittens 2 auf der Führungsbahn 1 korrigiert werden soll. Die Erleichterung der Verschiebung des Schlittens 2 erfolgt deswegen, weil die Berührungsfläche zwischen Führungsbahn 1 und Schlitten 2 nur durch die Grösse der Oberfläche der Vorsprünge 38 und 39 gegeben ist. Zwischen kleineren Flächen kann sich naturgemäss weniger Schmutz ansammeln, der das Gleiten der genannten Flächen aufeinander beinträchtigen kann.

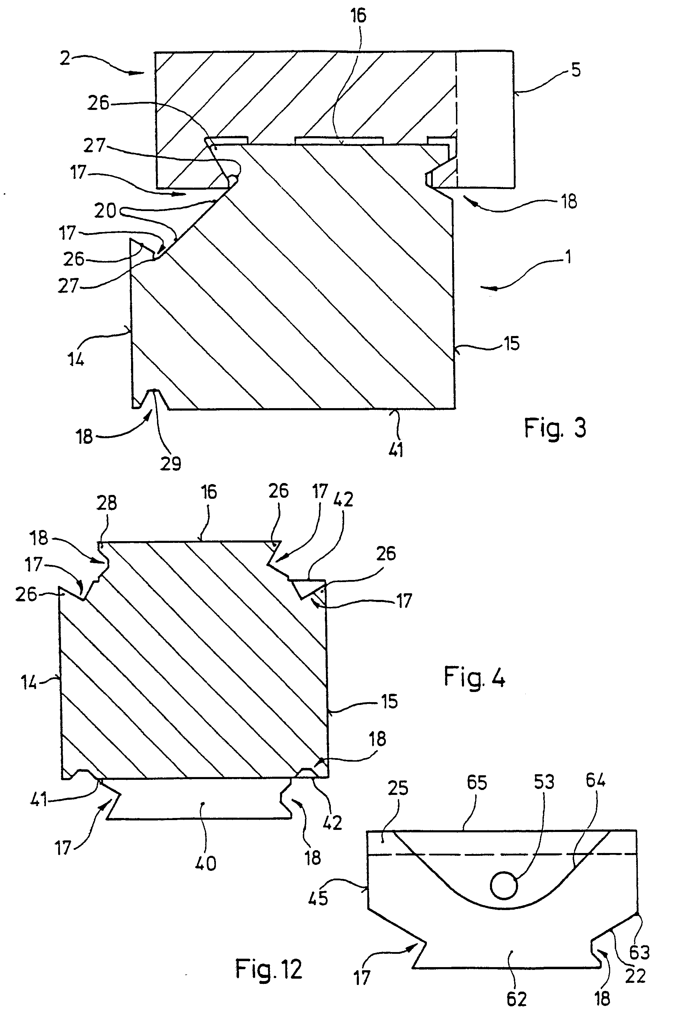

In Fig. 3 ist eine Führungsbahn 1 dargestellt, bei welcher je ein Paar der Nuten 17 und 18 den benachbarten Oberflächen 14 und 16 der Führungsbahn 1 zugeordnet ist. Wie aus Fig. 3 ersichtlich ist, ist die Art der Nuten 17 in der für die beiden genannten Oberflächen 14 und 16 gemeinsamen Eckpartie der Führungsbahn 1 dieselbe. Im dargestellten Beispiel handelt es sich um die Nuten 17 mit dem Freistich 27, die eine Doppelnut bilden. Die sich einander zugewandten Flanken 20 dieser Nuten 17 liegen tiefer in der Führungsbahn 1 als die genannten Oberflächen 14 und 16 desselben. Die abgewandten Flanken 19 der zwei Nuten 17 bilden mit der diesen jeweils zugeordneten Oberfläche 14 bzw. 16 eine scharfe Kante 26. Die eine der Nuten 18 mit dem flachen Boden 29 ist in der zweiten Seitenwand 15 der Führungsbahn 1 und die andere der Nuten 18 mit dem flachen Boden 29 ist in der Unterseite 41 der Führungsbahn 1 ausgeführt.

Auf jeder der zwei so profilierten Partien der Führungsbahn 1 kann mindestens ein Schlitten bzw. Halter 2 angeordnet und mit Hilfe der Haltevorrichtung 5 befestigt sein. In Fig. 3 ist nur einer der Schlitten 2 dargestellt, der auf der oberen profilierten Partie der Führungsbahn 1 sitzt. Auf der seitlichen profilierten Partie der Führungsbahn 1 wird der Schlitten so angeordnet, dass die Haltevorrichtung 5 desselben im Bereich der unteren Nut 18 liegt. Denn die Klinke 4 dieser Vorrichtung 5 kann ja nur in jene Nut 18 eingreifen, die einen flachen Boden 29 aufweist und somit ausreichend breit für die Aufnahme der Nase 35 der Klinke 4 ist. An eine so ausgebildete Führungsbahn 1 lassen sich somit mehrere Werkstücke befestigen. wobei diese beispielsweise unter einem rechten Winkel stehen können.

Gemäss Fig. 4 ist auch der zweiten Seitenfläche 15 ein Paar der genannten Nuten 17 und 18 zugeordnet. Die Nut 17, die mit der zweiten Seitenfläche 15 eine scharfe Kante 26 bildet, befindet sich oben. Die Nut 17, die mit der oberen Fläche 16 der Führungsbahn 1 eine scharfe Kante 26 bildet, befindet sich im Fall gemäss Fig. 4 rechts, während die Nut 18, die mit der oberen Fläche 16 der Führungsbahn 1 eine stumpfe Kante 28 bildet, sich in Fig. 4 links befindet. Bei der ersten Seitenfläche 14 der Führungsbahn 1 steht der Nut 18 jene Nut 17 gegenüber, die mit der ersten Seitenfläche 14 eine scharfe Kante 26 bildet.

Eine der Oberflächen des Grundkörpers der Führungsbahn 1, (in Fig. 4 handelt es sich um die Unterseite 41 der Führungsbahn 1), ist mit einem flachen Fortsatz 40 versehen. Die Seitenflächen dieses Ansatzes 40 sind mit den bereits genannten Nuten 17 und 18 versehen. Ein solcher Ansatz kann beispielsweise zur Befestigung der Führungsbahn 1 am Spanntisch 11 einer Werkzeugmaschine oder zum Anbringen eines weiteren Schlittens 2 an der Führungsbahn 1 dienen. Der Ansatz 40 kann gleich breit sein wie der übrige Teil der Führungsbahn 1 oder er kann kürzer als dieser sein. Ausserdem kann dieser Ansatz 40 kürzer sein als die Führungsbahn 1, wobei der Fortsatz 40 auf dem Grundkörper der Führungsbahn 1 zwischen deren Endpartien ausgebildet sein kann.

Die Nuten 17 und 18 brauchen sich nicht über die ganze Länge der Führungsbahn 1 zu erstrecken. Aus Fig. 4 ist ersichtlich, dass der auf das rechte Paar von Nuten 17 und 18 folgende Fortsatz 42 der Führungsbahn 1 sich weiter erstreckt ohne dass er mit den Nuten 17 und 18 versehen ist.

In Fig. 5 ist eine Führungsbahn 1 mit zwei profilierten Randpartien dargestellt, die in Fig. 4 bereits beschrieben worden sind. Diese Führungsbahn 1 ist horizontal angeordnet und ruht auf den Füssen 10, die auf dem Spanntisch 11 einer Werkzeugmaschine oder auf einem Voreinstellplatz mit Hilfe von an sich bekannten Schrauben befestigt sind.

Die stangenförmige bzw. prismatische Führungsbahn 1 kann jedoch auch vertikal angeordnet sein, wie dies in Fig. 6 dargestellt ist. Das untere Ende einer so angeordneten Führungsbahn 1 ist auf einer Grundplatte 43 befestigt. Mit dem die Nuten 17 und 18 aufweisenden Abschnitt der Führungsbahn 1 können ein oder mehrere geführte Stücke in Eingriff stehen. Man kann den jeweiligen Schlitten 2 mit Hilfe einer solchen Einrichtung in jede gewünschte Höhe bringen und dort mit Hilfe der Haltevorrichtung verriegeln.

In Fig. 7 ist die Unterseite des Schlittens 2 in Ansicht gezeigt, während Fig. 8 den Schnitt VIII - VIII durch die in Fig. 7 dargestellte Ausführung des Schlittens 2 zeigt. Im Grundkörper 45 des Schlittens 2 ist die bereits genannte Ausnehmung 25 ausgeführt, wobei über dem Boden 33 derselben sich die Vorsprünge 38 und 39 erheben. Im oberen Bereich der Ausnehmung 25 befindet sich die unterschnittene Seitenwand 30 derselben. Etwa in der Mitte der Breite des Schlittens 2 ist die unterschnittene Seitenwand 30 der Ausnehmung 25 mittels eines Einstiches 46 unterbrochen, so dass diese einen linken Abschnitt 47 und einen rechten Abschnitt 48 aufweist. Diese Abschnitte 47 und 48 der unterschnittenen Ausnehmung 25 stehen mit der den Freistich 27 aufweisenden Furche 17 der Führungsbahn 1 in Eingriff.

Etwa in der Mitte der Breite des Schlittens 2 ist im Bereich der gegenüberliegenden Seitenwand 32 der Ausnehmung 25 eine viereckige durchgehende Öffnung 50 ausgeführt, in der die Klinke 4 untergebracht ist. Die Klinke 4 ist mit Hilfe der bereits genannten Schraube 6 gegen die Führungsbahn eindrückbar. Diese Schraube 6 ist durch eine Öffnung 51 im Grundkörper 45 des Schlittens 2 zugänglich. Die gegenüberliegenden Randpartien des Grundkörpers 45 des Schlittens 2 sind mit Gewindeöffnungen 52 versehen, damit am Schlitten 2 das Werkstück bzw. andere Teile der Einrichtung befestigt werden können.

Die Abschnitte 47 und 48 der unterschnittenen Seitenwand 30 der Ausnehmung 25 bilden mit der Klinke 4 drei Stellen, über die der Schlitten 2 auf der Führungsbahn 1 befestigt ist. Diese 3-Punkt-Befestigung, die mit den entsprechenden Pfeilen in Fig. 7 angedeutet ist, stellt eine stabile Lage des Schlittens 2 gegenüber der Führungsbahn 1 sicher.

Gemäss Fig. 9 weist der Grundkörper 45 des Schlittens 2 eine durchgehende Bohrug 53 auf, durch welche eine lange Schraube 54 hindurchgeht. Die Spitze dieser Schraube 54 ist mit einem Gewinde versehen und sie ist in der Klinke 4 eingeschraubt, die ein entsprechendes Gewindeloch aufweist.

Der Grundkörper 45 des Schlittens 2 weist (Fig. 10) eine schräg verlaufende Bohrung 55 im Bereich der Klinke 4 auf, in der sich eine Schraube 56 befindet. Diese Schraube 56 ist ebenfalls in die Klinke 4 eingeschraubt, sie kann jedoch kürzer sein als die Schraube 54 bei dem Grundkörper 45 nach Fig. 9. Die Gewindebohrung 57 in der Klinke 4 verläuft ebenfalls schräg, wobei senkrecht zur Achse dieser Bohrung 57 eine der Oberflächen 58 eines dachförmigen Vorsprunges 60 an der Klinke 4 verläuft. In diesem Vorsprung 60 der Klinke 4 ist eine Erweiterung 61 ausgeführt, in der sich die bereits genannte Druckfeder 9 befindet. Diese Feder 9 liegt einerseits auf dem Boden der Erweiterung 61 und andererseits auf der Wand des Grundkörpers 45 auf. Die Folge davon ist, dass die Klinke 4 vom Grundkörper 45 durch die Feder 9 weggedrückt wird.

Bei den bisher beschriebenen Ausführungsformen der vorliegenden Einrichtung war der Grundkörper 45 des Schlittens 2 plattenförmig, wobei die übrigen Wände dieses Körpers plan waren. Der Grundkörper 45 kann jedoch auch eine gegliederte Ausbildung haben, was weitere Möglichkeiten für das Kombinieren der Bestandteile der Einrichtung bietet.

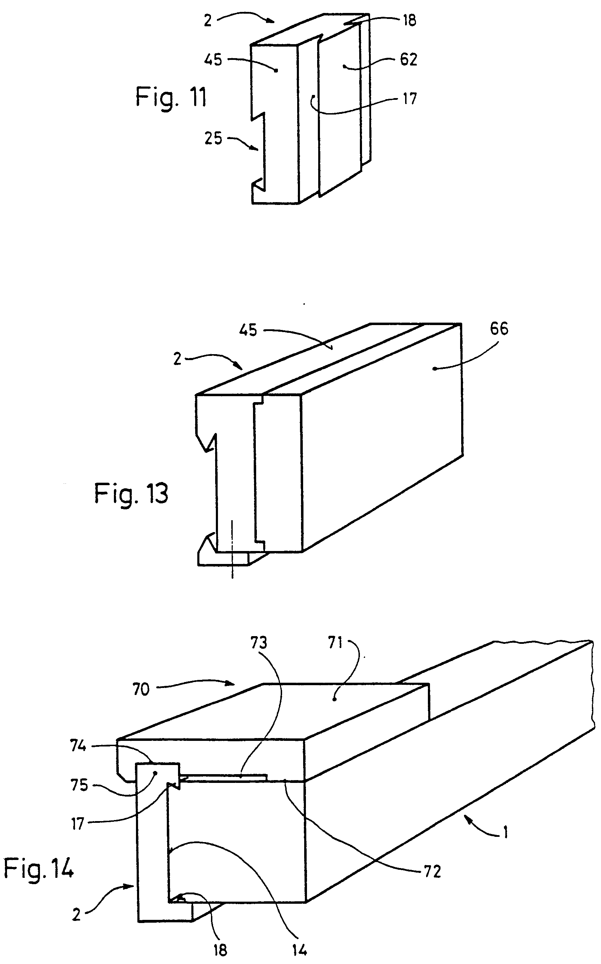

Der Schlitten 2 kann neben der Ausnehmung 25 auch mit Nuten 17 und 18 versehen sein (Fig. 11), die im Zusammenhang mit der Führungsbahn 1 vorstehend beschrieben worden sind. Diese Nuten 17 und 18 können entweder parallel zur Ausnehmung 25 verlaufen oder unter einem Winkel zu dieser stehen. Hierbei kann die Ausnehmung 25 in einer der Oberflächen des Grundkörpers 45 ausgeführt sein, während die Nuten 17 und 18 in der dazu gegenüberliegenden Wand des Grundkörpers 45 ausgeführt sind. Der Winkel, den die Nuten mit der Ausnehmung 25 schliessen, beträgt im dargestellten Beispiel 90 Grad. Die Nuten 17 und 18 sind in den Seitenwänden eines Fortsatzes 62 des Grundkörpers 45 ausgeführt, und zwar in der Weise, wie dies im Zusammenhang mit Fig. 4 beschrieben worden ist.

Der Grundkörper 45 kann auch wesentlich breiter sein als der Fortsatz 62, wie dies aus Fig. 12 ersichtlich ist. Um diesen Breitenunterschied zu überbrücken, ist wenigsten eine der Flanken 22 einer der Nuten 18 so verlängert, dass sie bis zur nächstliegenden Seitenwand des Grundkörpers 45 reicht und dort eine Kante 63 bildet. Der in Fig. 12 dargestellte Grundkörper 45 weist eine in seiner Längsrichtung verlaufende Vertiefung 64 auf, die noch vor dem Bereich 65 des Grundköpers 45 mit der senkrecht dazu verlaufenden und sich nach oben öffnenden Ausnehmung 25 endet. Unter der Ausnehmung 25 ist die Öffnung 53 zur Aufnahme der Schraube 54 (Fig. 9) ausgeführt.

Wie aus Fig. 13 ersichtlich ist, kann auf dem Grundkörper 45 des Schlittens 2 ein Magnet 66 befestigt sein, der zur Aufnahme des Werkstückes dienen kann. Dieser Magnet 66 kann mit Vorteil ein Permanentmagnet sein.

Bei einer weiteren Ausführungsform der Erfindung, die in Fig. 14 dargestellt ist, ist ein gleitender Tisch 70 vorgesehen. Die linke Seitenpartie 14 der Führungsbahn 1 ist mit den Nuten 17 und 18 versehen, mit den ein an der Führungsbahn 1 seitlich angebrachter Schlitten 2 in Eingriff steht. Der Tisch 70 weist einen gleitenden Oberteil 71 auf. Die Unterseite der rechten Randpartie dieses Oberteiles ist mit einer Auflagefläche 72 versehen. Neben dieser Auflagefläche 72 befindet sich ein hochliegender Teil 73 des Oberteiles 71. In der linken Randpartie des Oberteiles 71 ist ein Kanal 74 vorhanden, der derart ausgebildet ist, dass in diesem die obere Randpartie 75 des Schlittens 2 liegen kann. Der Oberteil 71 ist somit über die Auflagefläche 72 und den Schlitten 2 abgestützt und zudem ist er mit Hilfe von Schrauben (nicht dargestellt) auf dem Schlitten 2 befestigt. Der Schlitten 2 ist mit einer der die Klinke 4 aufweisenden Haltevorrichtung 5 versehen, die in Fig. 7 bis 10 dargestellt sind. An der Führungsbahn 1 können nicht nur der Arbeitstisch 70 sondern beispielsweise auch ein Schlitten 2 zugleich angeordnet sein.

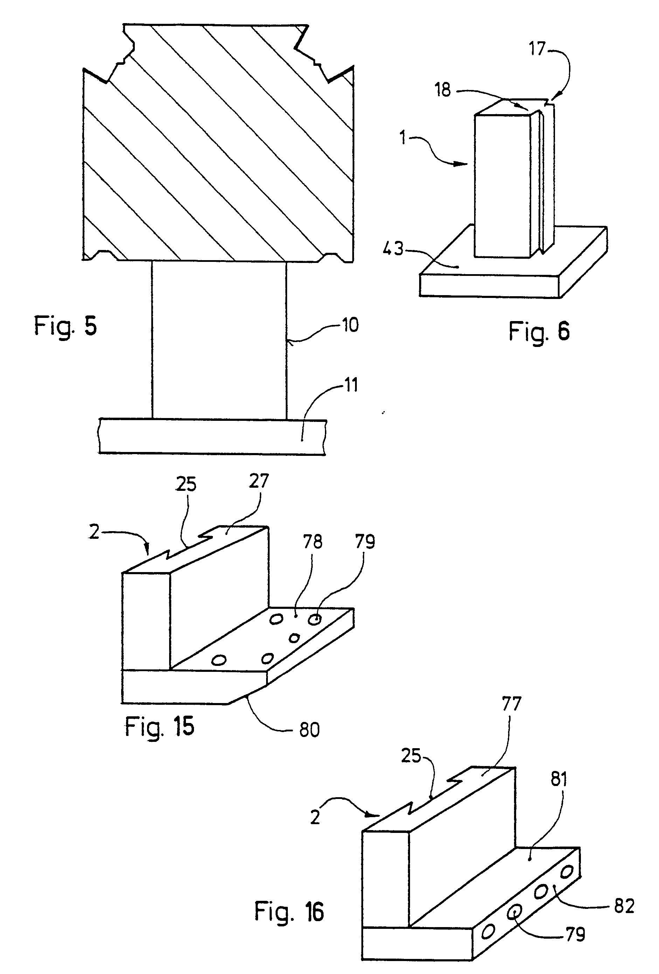

Gemäss Fig. 15 weist der Schlitten 2 in einem Längsschnitt im wesentlichen die L-Form auf. Die ruckwärtige Seite des emporragenden Schenkels 77 des Schlittens 2 ist mit der im wesentlichen trapezförmigen Ausnehmung 25 versehen, deren Seitenwände 30 und 32 bzw. 4 mit den Nuten 17 und 18 einer Führungsbahn 1 in Eingriff stehen. Der seitlich vorspringende Teil bzw. Schenkel 78 des Schlittens 2 ist mit im wesentlichen vertikal verlaufenden Löchern 79 versehen, die zur Aufnahme von Bolzen zur Befestigung eines Werkstückes oder Werkzeuges bestimmt sind.

Die Unterseite des Werkstuckhalters ist mit einer abgeschrägten vorderen Seite bzw. Phase 80 versehen, um die Möglichkeit eines allfälligen Zusammenstosses mit den übrigen Teilen der Maschine auf ein Minimum zu reduzieren.

Fig. 16 betrifft ebenfalls einen L-förmigen Schlitten 2 mit der Ausnehmung 25 und einem vorspringenden Teil 81. In der Endfläche 82 des vorspringenden Schenkels 81, die von der Ausnehmung 25 abgewandt ist, ist eine Vielzahl von Bohrungen 79 ausgeführt. Diese sind ebenfalls so ausgeführt, dass sie Bolzen aufnehmen können, die zur Befestigung des Werkstückes auf dem Schlitten 2 dienen.

Bei den Schlitten 2 gemäss den Fig. 15 und 16 ist der vertikale Schenkel 77 des Schlittens 2 mit der bereits beschriebenen Haltevorrichtung 5 (Fig. 7 bis 10) versehen, um den Schlitten 2 auf der Führungsbahn 1 in gegebener Lage halten zu können.

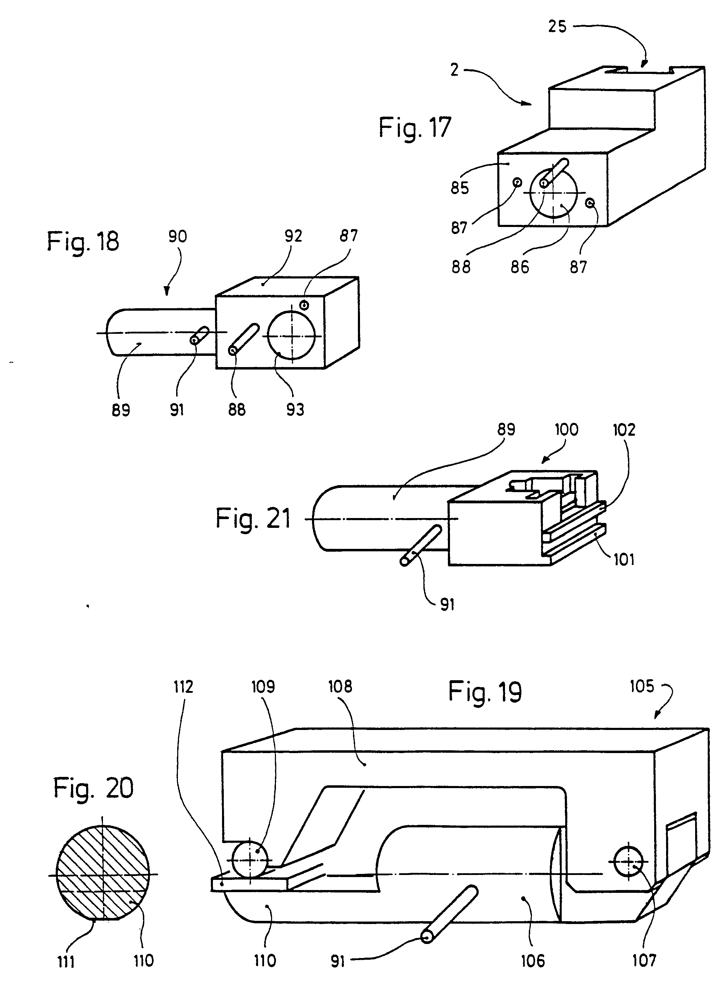

Der Schlitten 2 gemäss Fig. 17 weist ebenfalls eine im wesentlichen L-förmige Gestalt auf und er ist mit einem vorstehenden bzw. horizontal verlaufenden Schaftflansch 85 versehen. Dieser Flansch 85 weist eine verhältnismässig grosse Tiefe auf, damit in diesem eine Schaftbohrung 86 sowie eine Anzahl von Bohrungen 87 zur Aufnahme von Bolzen 88 ausgeführt werden kann. Die Bolzen 88 bestimmen die Lage eines in der Schaftbohrung 86 angeordneten Schaftes 89, der an einer weiteren Komponente 90 bzw. 100 usw. angebracht ist.

Mit den Schlitten 2 gemäss den Fig. 15 bis 17 können beispielsweise Anordnungen gemäss den Fig. 6, 11 und 12 zusammenarbeiten.

In Fig. 18 ist die bereits erwähnte Komponente 90 mit dem Schaft 89 dargestellt. Der Schaft 89 ist mit einem von diesem abstehenden Stift 91 versehen, der, wenn sich der Schaft 89 in der Schaftbohrung 86 des Teiles nach Fig. 17 befindet, zum Aufliegen auf einem der Bolzen 88 gebracht werden kann. Dadurch wird die Drehlage des Schaftes 89 festgelegt.

Das äussere Ende des Schaftes 89 ist mit einem Block 92 versehen, in dem ebenfalls eine Schaftbohrung 93 ausgeführt ist, die sich im wesentlichen rechtwinklig zur Achse des Schaftes 89 an diesem Block 92 erstreckt. Feststellmittel, wie z. B. die Bolzen 88, sind am Block 92 angebracht, damit die Lage des Stiftes 91 auf dem Schaft 89 einer weiteren Komponente dieser Einrichtung begrenzt werden kann. Runde Werkstücke können daher mit Hilfe des Gerätes nach Fig. 17 und 18 achsial oder senkrecht zum Schlitten 2 positioniert werden.

Der Schaft 89 ist gemäss Fig. 21 derart ausgeführt, dass er in die Bohrung 86 bzw. 93 passt und dass dessen Ende mit einem Schraubstockblock 100 versehen ist, der eine im wesentlichen rechtwinklige Form aufweist. Die obere äussere Kante des Schraubstockblocks 100 ist mit einem im wesentlichen U-förmigen Kanal versehen, der im Block endet und die untere Backe 101 eines kleinen Klemmgliedes bildet. Ein bewegliches Glied 102 ist derart ausgebildet, dass es sich in gegenüberliegenden Kanälen bewegen kann, die im U-förmigen Kanal angeordnet sind. Es ist zum Andrücken des Werkstückes gegen die untere Backe 101 bestimmt.

Durch eine Drehung des Schafts 89 in der Schaftbohrung 86 bzw. 93 kann das im genannten Schraubstock 100 gehaltene Werkstück in geeigneter Weise positioniert werden, und zwar achsial oder/und radial in bezug auf die Achse des Werkstückhalters 90 bzw. 100. Dies hängt davon ab, ob das Gerät nach Fig. 17 oder nach Fig. 18 verwendet wird.

Um die Winkel der Schäfte genau orientieren zu können, wird ein Sinuslineal 105 verwendet. Dieses enthält einen unteren Schenkel 106, der über ein Gelenk mit einem Stift 107 an ein oberes Glied 108 angelenkt ist. Am entfernt liegenden Ende des oberen Gliedes 108 findet sich eine Walze 109. Wenn diese Walze 109 auf ein Endmass 112 aufgesetzt wird, das sich auf dem unteren Schenkel 106 befindet, dann verursacht die Drehung um den mittleren Punkt des Stiftes 107, dass das obere Glied 108 sich seitlich bewegt. Die Unterseite des unteren Schenkels 106 ist im Bereich des schaftförmigen Endes 110 desselben mit einer planen Fläche 111 versehen.

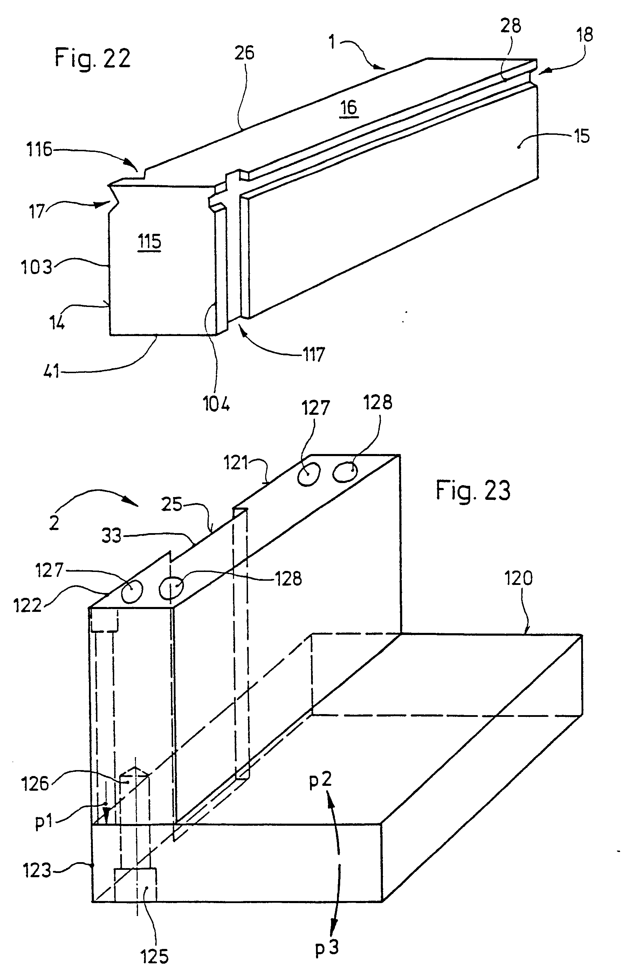

Die in Fig. 22 dargestellte Führungsbahn 1 weist die bereits beschriebenen Nuten 17 und 18 auf, die der Oberseite 16 diese Führungsbahn 1 zugeordnet sind. Es ist ebenfalls bereits beschrieben worden, dass die genannten Nuten 17 und 18 in den Seitenwänden 14 und 15 der Führungsbahn 1 ausgeführt sind, und zwar parallel zu den Seitenkanten 26 und 28 derselben. Der Stirnfläche 115 der Führungsbahn 1 ist auch ein Paar von Nuten 116 und 117 zugeordnet, die allerdings parallel zu jenen Kanten 103 und 104 der Stirnfläche 115 verlaufen, welche dieser Stirnfläche 115 und den Seitenwänden 14 und 15 gemeinsam sind. Die zweiten Nuten 116 und 117 sind somit ebenfalls in den Seitenflächen 14 und 15 ausgeführt aber sie verlaufen unter einem Winkel zum ersten Paar der Nuten 17 und 18, der im dargestellten Beispiel 90 Grad beträgt. Die zweiten Nuten könnten selbstverständlich auch in der Oberseite 16 und in der Unterseite 41 der Führungsbahn 1 ausgeführt sein.

An einer solchen Führungsbahn können Schlitten 2 so angeordnet sein, dass sie entweder mit dem ersten Paar von Nuten 17 und 18 oder mit dem zweiten Paar von Nute 116 und 117 in Eingriff stehen. Eine solche Führungsbahn kann nicht nur liegend sondern auch aufrecht angeordnet sein, wie dies in Fig. 6 dargestellt ist.

Gemäss Fig. 23 weist der Schlitten 2, der im wesentlichen L-förmig ist, zwei plattenförmige Teile 120 und 121 auf, wobei der erste dieser Teile 120 liegend angeordnet ist. Dieser erster Teil 120 bildet den horizontalen Schenkel der L-Form und auf diesem wird das Werkstück in einer der bekannten Weisen befestigt. Auf diesem unteren Schenkel 120 ist der zweite Schenkel 121 aufgestellt, wobei in der Rückwand 122 dieses zweiten Schenkels 121 die Ausnehmung 25 für die Aufnahme einer der Führungsbahnen 1 ausgeführt ist. Falls die Rückwand 122 des vertikalen Schenkels 121 mit der hinteren Schmalwand 123 der horizontalen Platte 120 bündig ist, dann muss die Ausnehmung 25 auch in der Schmalwand 123 ausgeführt sein. Dies kann man umgehen, indem der vertikale Schenkel 121 in bezug auf die Schmalwand 123 des ersten Schenkels 120 so weit nach hinten versetzt angeordnet ist, dass der Boden 33 der Ausnehmung 25 erst hinter der Schmalwand 123 liegt.

Von unten her sind in den liegenden Schenkel 120 Schrauben 125 eingeführt, von welchen in Fig. 23 nur eine dargestellt ist. Vorteilhaft sind je eine Schraube 125 zu den beiden Seiten der Ausnehmung 25 vorgesehen. Die Spitzen 126 dieser Schrauben 125 sind im unteren Teil des stehenden Schenkels 121 eingeschraubt, so dass die zwei Schenkel 120 und 121 eine Einheit bilden. Um die gegenseitige Lage der zwei Schenkel 120 und 121 entsprechend den jeweiligen Anforderungen fein einstellen zu können, sind in den stehenden Schenkel 121 je zwei Schrauben 127 und 128 eingeschraubt, und zwar so, dass die jeweilige Schraube 127 bzw. 128 der zwei genannten Schraubenpaare sich zu den beiden Seiten von der entsprechenden unteren Schraube 125 in einem bestimmten Abstand befindet. Die Öffnungen im stehenden Schenkel 121, in welchen die Schrauben 127 und 128 eingeschraubt sind, sind durchgehend, so dass die Spitzen der oberen Schrauben 127 und 128 aus dem stehenden Schenkel 121 unten hervorstehen können.

Die unteren Schrauben 125 ziehen den stehenden Schenkel 121 nach unten, wie dies mit Hilfe des Pfeiles p1 angedeutet ist. Wenn man eine der oberen Schrauben 127 bzw. 128 anzieht, dann ändert sich der Winkel zwischen dem liegenden Schenkel 120 und dem stehenden Schenkel 121. Wenn man die erste, d.h. die linke obere Schraube 127 anzieht, dann bewegt sich die rechte Partie des liegenden Schenkels 120 aufwärts in Richtung des Pfeiles p2. Die andere, d.h. die von der unteren Schraube 125 rechts liegende obere Schraube 128 verursacht ein Ausschwenken der rechts liegenden Partie des liegenden Schenkels 120 abwärts in Richtung des Pfeiles p3.

Mit Hilfe der obigen Anordnung kann eine präzise Positionierung eines Werkstückes zur maschinellen Behandlung, insbesondere zur Behandlung durch Elektroerosion, erreicht werden, und zwar bei einem Minimum an Stillstandzeiten und bei einem Maximum an Flexibilität.

Die Berührungsflächen zwischen der Führungsbahn und dem Schlitten sind so ausgebildet und so bemessen, dass nach einer Einführung der Führungsbahn in den Schlitten dieses Gefüge unter dem Einfluss des Eigengewichtes dieser Teile nicht zerfallen kann, auch wenn die Klinke der Haltevorrichtung nicht angezogen ist.

## Patentansprüche

1. Einrichtung zur Halterung eines Gegenstandes in einer gewünschten räumlichen Lag mit einer Führungsbahn (1) und einem darauf geführten Schlitten (2), an welchem der Gegenstand befestigbar ist, wobei die Führungsbahn (1) an eine gemeinsame Oberfläche (16) angrenzende Randpartien zweier gegenüberliegender Seitenflächen aufweist, die mit Nuten (17, 18) versehen sind, und mit einer Haltervorrichtung (5) am Schlitten, die mit der darunterliegenden Nut (17, 18) der Führungsbahn (1) in Eingriff steht, dadurch gekennzeichnet, daß die Haltevorrichtung (5) eine Klinke (4) aufweist und daß eine Nase (35) dieser Klinke (4) in einer der Nuten (18) der Führungsbahn (1) liegt.

2. Einrichtung nach Anspruch 1, dadurch gekennzeichnet, daß die Klinke (4) mit Hilfe einer Schraube (6) in einer Aussparung (3) gehalten wird, wobei die Schraube (6) in einer Gewindebohrung (7) eingeschraubt ist, die im Schlitten (2) aufgeführt ist.

3. Einrichtung nach Anspruch 2, dadurch gekennzeichnet, daß der äußere Abschnitt der Bohrung (7) mit einer Erweiterung (8) ausgeführt ist, in der sich eine Druckfeder (9) befindet.

4. Einrichtung nach Anspruch 1, dadurch gekennzeichnet, daß die Führungsbahn (1) als ein Prisma ausgebildet ist.

5. Einrichtung nach Anspruch 1, dadurch gekennzeichnet, daß der Schlitten (2) auch mit Nuten (17, 18) versehen ist.

6. Einrichtung nach Anspruch 5, dadurch gekennzeichnet, daß die Nuten (17, 18) unter einem Winkel, vorteilhaft von 90 Grad, zu einer Ausnehmung (25) im Schlitten (2) verlaufen.

7. Einrichtung nach Anspruch 1, dadurch gekennzeichnet, daß der Schlitten (2) im vertikalen Schnitt L-förmig ist und daß dieser mit Gewindelöchern (79) zur Aufnahme von Schrauben versehen ist, die zur Befestigung eines Gegenstandes auf diesem bestimmt sind.

8. Einrichtung nach Anspruch 1, dadurch gekennzeichnet, daß wenigstens eine der Komponenten (2 bzw. 90) der Einrichtung eine Öffnung (86 bzw. 93) zur Aufnahme eines Schaftes (80 bzw. 110) aufweist, den eine weitere Komponente der Einrichtung aufweist und daß die Komponente mit dem Schaft einen gegliederten Grundkörper (92, 100, 105) aufweist, der sich an den Schaft anschließt.

9. Einrichtung nach Anspruch 8, dadurch gekennzeichnet, daß die Komponente mit der Öffnung in einem vertikalen Längsschnitt etwa L-förmig ist und daß die Öffnung in einem der Schenkel (85) einer solchen Komponente ausgeführt ist.

10. Einrichtung nach Anspruch 8, dadurch gekennzeichnet, daß der Grundkörper als ein Schraubstock (100) ausgeführt ist.

11. Einrichtung nach Anspruch 8, dadurch gekennzeichnet, daß der Grundkörper (92) der Komponente mit dem Schaft eine Öffnung (93) zur Aufnahme des Schaftes einer weiteren Komponente der Einrichtung aufweist und daß eine Vorrichtung (88, 91) vorgesehen ist, die zur Feststellung der gegenseitigen Lage der beiden Komponenten dient.

12. Einrichtung nach Anspruch 8, dadurch gekennzeichnet, daß der Grundkörper als Sinuslineal (105) ausgebildet ist.

13. Einrichtung nach Anspruch 1, dadurch gekennzeichnet, daß die Führungsbahn (1) länglich ist und daß ein Paar von Nuten (116, 117) wenigstens einer der Stirnflächen (115) der Führungsbahn (1) zugeordnet ist.

14. Einrichtung nach Anspruch 7, dadurch gekennzeichnet, daß der L-förmige Schlitten (2) zwei plattenförmige Teile (120, 121) aufweist, die einen Winkel schließen, daß die eine Platte mit der anderen Platte mittels ersten Schrauben (125) verbunden ist und daß zweite Schrauben (127, 128) vorgesehen sind, die gegen die ersten Schrauben gerichtet sind und die auf jene Platte Druck ausüben können, durch die die Befestigungsschrauben (125) hindurchgehen.

**Claims**

1. Device for holding an object in a desired spatial position having a guide track (1) and a slide (2) which is guided thereon and to which the object can be secured, in which the guide track (1) has, adjoining a common surface (16), edge parts of two side faces which lie opposite each other and are provided with grooves (17, 18), the device also having a holding arrangement (5) on the slide, which arrangement is engaged with the subjacent groove (17, 18) of the guide track (1), characterised in that the holding arrangement (5) has a catch (4) and in that a lug (35) of this catch (4) lies in one of the grooves (18) of the guide track (1).

2. Device according to claim 1, characterised in that the catch (4) is held with the aid of a screw (6) in a recess (3), the screw (6) being screwed in a threaded bore hole (7) which is formed in the slide (2).

3. Device according to claim 2, characterised in that the outer section of the bore hole (7) is formed with a widened portion (8) in which there is located a compression spring (9).

4. Device according to claim 1, characterised in that the guide track (1) is shaped as a prism.

5. Device according to claim 1, characterised in that the slide (2) is also provided with grooves (17, 18).

6. Device according to claim 5, characterised in that the grooves (17, 18) extend at an angle, advantageously of 90 degrees, to a recess (25) in the slide (2).

7. Device according to claim 1, characterised in that the slide (2) is L-shaped in vertical section and in that the latter is provided with threaded holes (79) for receiving screws which are intended for the purpose of securing an object to said slide.

8. Device according to claim 1, characterised in that at least one of the components (2 or 90) of the device has an opening (86 or 93) for receiving a shaft (80 or 110) which a further component of the device has and in that the component with the shaft has an articulated base body (92, 100, 105) which is connected to the shaft.

9. Device according to claim 8, characterised in that the component with the opening is substantially L-shaped in a vertical longitudinal section and in that the opening is formed in one of the sides (85) of such a component.

10. Device according to claim 8, characterised in that the base body is formed as a vice (100).

11. Device according to claim 8, characterised in that the base body (92) of the component with the shaft has an opening (93) for receiving the shaft of a further component of the device and in that there is provided an arrangement (88, 91) which serves to fix the mutual position of the two components.

12. Device according to claim 8, characterised in that the base body is formed as a sine bar (105).

13. Device according to claim 1, characterised in that the guide track (1) is oblong and in that a pair of grooves (116, 117) is associated with at least one of the faces (115) of the guide track (1).

14. Device according to claim 7, characterised in that the L-shaped slide (2) has two plate-like portions (120, 121) which form an angle, in that the one plate is connected with the other plate by means of first screws (125) and in that there are provided second screws (127, 128) which are directed towards the first screws and which can exert pressure on that plate through which the securing screws (125) pass.

**Revendications**

1. Dispositif de fixation d'un objet dans une position spatiale souhaitée, muni d'une piste de guidage (1) et d'un coulisseau (2) guidé sur celle-ci et sur lequel l'objet est susceptible d'être fixé, la piste de guidage (1) présentant sur une surface commune (16) des parties de bord qui sont limitrophes de deux faces latérales opposées et pourvues de rainures (17, 18) et d'un dispositif de maintien (5) sur le coulisseau, qui est en prise avec la rainure (17, 18), située au-dessous, de la piste de guidage (1), caractérisé en ce que le dispositif de maintien (5) comporte un cliquet (4) et ce qu'un ergot (35) de ce cliquet (4) est situé dans l'une des rainures (18) de la piste de guidage (1).

2. Dispositif selon la revendication 1, caractérisé en ce que le cliquet (4) est maintenu dans un évidement (3) à l'aide d'une vis (6) vissée dans un alésage fileté (7) réalisé dans le coulisseau (2).

3. Dispositif selon la revendication 2, caractérisé en ce que la partie extérieure de l'alésage (7) présente une partie élargie (8) dans laquelle est disposé un ressort de compression (9).

4. Dispositif selon la revendication 1, caractérisé en ce que la piste de guidage (1) présente une forme prismatique.

5. Dispositif selon la revendication 1, caractérisé en ce que le coulisseau (2) est également pourvu de rainures (17, 18).

6. Dispositif selon la revendication 5, caractérisé en ce que les rainures (17, 18) se développent en formant un angle, de préférence de 90°, vers un évidement (25) situé dans le coulisseau (2).

7. Dispositif selon la revendication 1, caractérisé en ce que le coulisseau (2) présente en section verticale une forme en L et est muni de trous filetés (79) destinés à recevoir des vis permettant la fixation d'un objet sur celui-ci.

8. Dispositif selon la revendication 1, caractérisé en ce qu'au moins l'un des composants (2 ou 90) du dispositif présente un orifice (86 ou 93) destiné à recevoir une tige (80 ou 110), qui comporte un autre composant du dispositif et en ce que le composant muni de la tige présente un corps de base articulé (92, 100, 105) se raccordant à la tige.

9. Dispositif selon la revendication 8, caractérisé en ce que le composant muni de l'orifice présente une section longitudinale verticale approximativement en forme de L et en ce que l'orifice est réalisé dans l'une des ailes (85) d'un tel composant.

10. Dispositif selon la revendication 8, caractérisé en ce que le corps de base est réalisé sous la forme d'un étau à vis (100).

11. Dispositif selon la revendication 8, caractérisé en ce que le corps de base (92) du composant muni de la tige présente un orifice (93) pour recevoir la tige d'un autre composant du dispositif et en ce qu'il comporte un moyen (88, 91) servant à déterminer la position respective des deux composants.

12. Dispositif selon la revendication 8, caractérisé en ce que le corps de base est réalisé sous la forme d'une règle sinus (105).

13. Dispositif selon la revendication 1, caractérisé en ce que la piste de guidage (1) présente une forme oblongue et en ce qu'une paire de rainures (116, 117) est affectée à au moins l'une des faces frontales (115) de la piste de guidage (1).

14. Dispositif selon la revendication 7, caractérisé en ce que le coulisseau (2) en forme de L comporte deux parties en forme de plaques (120, 121) formant un angle, en ce que l'une des plaques est reliée à l'autre plaque au moyen de premières vis (125) et en ce qu'il comporte des deuxièmes vis (127, 128) dirigées vers les premières vis et susceptibles d'exercer une pression sur la plaque qui est traversée par les vis de fixation (125).

Fig. 1

Fig. 2

Fig. 3

Fig. 4

Fig. 12

3

Fig. 7
Fig. 8
Fig. 9
Fig. 10

Fig. 11

Fig. 13

Fig. 14

Fig. 5

Fig. 6

Fig. 15

Fig. 16

Fig. 17

25

2

85

87

88  86  87

Fig. 18

90  92  87

89  91  88  93

Fig. 21

89  100  102

91  101

Fig. 20  Fig. 19

112  109  108  105

111  110

110  91  106  107

Fig. 22

Fig. 23